# EUROPÄISCHE PATENTSCHRIFT

(11) **EP 2 310 211 B1**
(45) Veröffentlichungstag und Bekanntmachung des Hinweises auf die Patenterteilung: **04.06.2014**
(21) Anmeldenummer: 09772170.8
(22) Anmeldetag: 02.07.2009
(51) Int. Cl.: B42D 15/00, B42D 25/00

(54) **SICHERHEITSELEMENT SOWIE VERFAHREN ZU SEINER HERSTELLUNG**
SECURITY ELEMENT AND METHOD FOR THE PRODUCTION THEREOF
ÉLÉMENT DE SÉCURITÉ ET SON PROCÉDÉ DE FABRICATION

(30) Priorität: 02.07.2008 DE 102008031325
(43) Veröffentlichungstag der Anmeldung: 20.04.2011
(73) Patentinhaber: Giesecke & Devrient GmbH, 81677 München (DE)
(72) Erfinder: HOFFMÜLLER, Winfried, 83646 Bad Tölz (DE); DICHTL, Markus, 81371 München (DE); BICHLMEIER, Stefan, 82008 Unterhaching (DE); HOFFMANN, Lars, 85354 Freising (DE); HEIM, Manfred, 83646 Bad Tölz (DE)
(86) Internationale Anmeldenummer: PCT/EP2009/004768
(87) Internationale Veröffentlichungsnummer: WO 2010/000470

(56) Entgegenhaltungen:
- WO-A-2006/040069
- WO-A-2007/138293

## Beschreibung

Die Erfindung betrifft ein Sicherheitselement zur Absicherung von Wertgegenständen mit einer optisch variablen Schicht, die unter unterschiedlichen Betrachtungswinkeln unterschiedliche Farbeindrücke vermittelt. Die Erfindung betrifft ferner ein Verfahren zum Herstellen eines derartigen Sicherheitselements, ein Transferelement, ein Sicherheitspapier sowie einen Wertgegenstand mit einem solchen Sicherheitselement.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen. Wertgegenstände im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Wertgegenstand" schließt im Folgenden alle derartigen Gegenstände, Dokumente und Produktsicherungsmittel ein.

Die Sicherheitselemente können beispielsweise in Form eines in eine Banknote eingebetteten Sicherheitsfadens, eines aufgebrachten Sicherheitsstreifens oder eines selbsttragenden Transferelements ausgebildet sein, wie eines Patches oder eines Etiketts, das nach seiner Herstellung auf ein Wertdokument aufgebracht wird.

Um die Nachstellung der Sicherheitselemente selbst mit hochwertigen Farbkopiergeräten zu verhindern, weisen die Sicherheitselemente vielfach optisch variable Elemente auf, die dem Betrachter unter unterschiedlichen Betrachtungswinkeln einen unterschiedlichen Bildeindruck vermitteln und etwa einen unterschiedlichen Farbeindruck oder unterschiedliche graphische Motive zeigen.

In diesem Zusammenhang ist bekannt, Sicherheitselemente mit mehrschichtigen Dünnschichtelementen einzusetzen, bei denen sich der Farbeindruck für den Betrachter mit dem Betrachtungswinkel ändert, und beim Kippen des Sicherheitsmerkmals beispielsweise von Grün nach Blau, von Blau nach Magenta oder von Magenta nach Grün wechselt. Derartige Farbänderungen beim Verkippen eines Sicherheitselements werden im Folgenden als Farbkippeffekt oder Color-Shift-Effekt bezeichnet.

Die Druckschrift US 3,858,977 beschreibt derartige optische Interferenzbeschichtungen mit Farbkippeffekt im Zusammenhang mit Sicherheitselementen. Je nach Art und Zahl der Schichten im Schichtaufbau können zwei oder mehr vom Betrachtungswinkel abhängige unterschiedliche Farbwirkungen auftreten.

In der Druckschrift EP 1 833 034 A1 wird ein Identifikationselement beschrieben, bei dem eine von cholesterischen Flüssigkristallen gebildete optisch variable Schicht vollflächig über einer Farbschicht angeordnet ist. Der Farbeindruck dieser Farbschicht ist jedoch nicht wirklich fix und die Designfreiheit des Identifikationselements ist eingeschränkt. Bei anderen vorbekannten Sicherheitselementen erscheint die Farbschicht oft zu dunkel.

Die Druckschrift WO2006/040069 A1 beschreibt ein Sicherheitselement mit dem Merkmalen des Oberbegriffs des Anspruchs 1 mit entsprechender Problematik.

Es ist eine Aufgabe der Erfindung, die vorgenannten Probleme zu lösen und insbesondere ein Sicherheitselement der vorgenannten Art dahingehend zu verbessern, dass der von der Farbschicht erzeugte Farbeindruck ausreichend hell ist und insbesondere bei unterschiedlichen Betrachtungsbedingungen möglichst stabil bleibt.

Diese Aufgabe wird durch das Sicherheitselement mit den Merkmalen des Hauptanspruchs gelöst. Ein Herstellungsverfahren für das Sicherheitselement, ein Transferelement, ein Sicherheitspapier sowie ein Wertgegenstand mit einem solchen Sicherheitselement sind in den nebengeordneten Ansprüchen angegeben. Weiterbildungen der Erfindung sind Gegenstand der Unteransprüche.

Gemäß der Erfindung enthält ein Sicherheitselement zur Absicherung von Wertgegenständen
- eine optisch variable Schicht, die unter unterschiedlichen Betrachtungswinkeln unterschiedliche Farbeindrücke vermittelt, und eine farbkonstante Schicht,
- wobei die optisch variable Schicht und die farbkonstante Schicht in einem Überdeckungsbereich übereinander abgeordnet sind, während außerhalb des Überdeckungsbereichs höchstens eine der optisch variablen Schicht und der farbkonstanten Schicht vorliegt,
- wobei der Farbeindruck der übereinander angeordneten Schichten im Überdeckungsbereich und der Farbeindruck der einen Schicht außerhalb des Überdeckungsbereichs bei Betrachtung unter einem vorbestimmten Betrachtungswinkel aneinander angepasst sind, und
- wobei die farbkonstante Schicht eine Farbschicht und eine unterhalb der Farbschicht angeordnete Metallschicht umfasst.

Nach einer ersten vorteilhaften Erfindungsvariante wird dabei ein Sicherheitselement zur Absicherung von Wertgegenständen mit einer optisch variablen Schicht bereitgestellt. Die optisch variable Schicht vermittelt unter unterschiedlichen Betrachtungswinkeln unterschiedliche Farbeindrücke. Weiterhin umfasst das Sicherheitselement eine in einem Überdeckungsbereich über der optisch variablen Schicht angeordnete Farbschicht, wobei der Farbeindruck der optisch variablen Schicht in einem nicht von der Farbschicht überdeckten Bereich bei Betrachtung unter einem vorbestimmten Betrachtungswinkel an den Farbeindruck der Farbschicht im Überdeckungsbereich angepasst ist. Zwischen der Farbschicht und der optisch variablen Schicht ist eine Metallschicht angeordnet.

Nach einer zweiten, ebenfalls vorteilhaften Erfindungsvariante ist in dem Überdeckungsbereich die optisch variable Schicht über der Farbschicht der farbkonstanten Schicht angeordnet.

Bei der Schichtenfolge des erfindungsgemäßen Sicherheitselements beziehen sich die Begriffe "über", "unter", "oben" und "unten" jeweils auf die Betrachtungsrichtung, auf die das Sicherheitselement ausgelegt ist. Wie auch in den Figuren dargestellt, sind die erfindungsgemäßen Sicherheitselemente auf Betrachtung von oben ausgelegt. Eine Schicht liegt daher über einer anderen Schicht, wenn sie bei der Betrachtung von oben näher am Auge des Betrachters liegt. Um eine weiter unten liegende Schicht zu sehen, muss der Betrachter durch Aussparungen einer weiter oben liegenden Schicht blicken.

Erfindungsgemäß wird weiterhin ein Transferelement zum Aufbringen auf ein Sicherheitspapier, Wertdokument oder dergleichen mit einem derartigen Sicherheitselement ausgestattet. Darüber hinaus wird gemäß der Erfindung ein Sicherheitspapier für die Herstellung von Sicherheits- oder Wertdokumenten, wie Banknoten, Schecks, Ausweiskarten, Urkunden oder dergleichen, bereitgestellt, das mit einem derartigen Sicherheitselement ausgestattet ist. Weiterhin ist erfindungsgemäß ein Wertgegenstand, wie ein Markenartikel, Wertdokument oder dergleichen, mit einem derartigen Sicherheitselement ausgestattet.

Weiterhin wird erfindungsgemäß ein Verfahren zum Herstellen eines Sicherheitselements zur Absicherung von Wertgegenständen bereitgestellt, bei dem
- die optisch variable Schicht und die farbkonstante Schicht in einem Überdeckungsbereich übereinander angeordnet werden, während auβerhalb des Überdeckungsbereichs höchstens eine der optisch variablen Schicht und der farbkonstanten Schicht angeordnet wird,
- wobei der Farbeindruck der übereinander angeordneten Schichten im Überdeckungsbereich und der Farbeindruck der einen Schicht außerhalb des Überdeckungsbereichs bei Betrachtung unter einem vorbestimmten Betrachtungswinkel aneinander angepasst werden, und
- die farbkonstante Schicht aus einer Farbschicht und eine unterhalb der Farbschicht angeordnete Metallschicht gebildet wird.

In einer vorteilhaften Verfahrensvariante ist vorgesehen, dass in dem Überdeckungsbereich über der optisch variablen Schicht die Farbschicht der farbkonstanten Schicht angeordnet wird, wobei der Farbeindruck der optisch variablen Schicht außerhalb des Überdeckungsbereichs bei Betrachtung unter einem vorbestimmten Betrachtungswinkel an den Farbeindruck der Farbschicht im Überdeckungsbereich angepasst wird, und die Metallschicht der farbkonstanten Schicht zwischen der Farbschicht und der optisch variablen Schicht angeordnet wird.

Nach einer anderen, ebenfalls vorteilhaften Verfahrensvariante wird in dem Überdeckungsbereich die optisch variable Schicht über der Farbschicht der farbkonstanten Schicht angeordnet.

Die gemäß der ersten Erfindungsvariante in dem Überdeckungsbereich über der optisch variablen Schicht angeordnete Farbschicht bzw. die gemäß der zweiten Erfindungsvariante in dem von der optisch variablen Schicht nicht überdeckten Bereich sichtbare Farbschicht stellt jeweils einen farbkonstanten Bereich dar. Der Farbeindruck der Farbschicht ändert sich bei Betrachtung unter den unterschiedlichen Betrachtungswinkeln nicht oder nur unwesentlich. In dem jeweils angrenzenden Bereich der optisch variablen Schicht hingegen ändert sich für den Betrachter der Farbeindruck abhängig vom Betrachtungswinkel. Die optisch variable Schicht ist dabei so konfiguriert, dass unter den unterschiedlichen Betrachtungswinkeln mindestens zwei verschiedene Farbeindrücke entstehen.

Bei Betrachtung des Sicherheitselements unter einem vorbestimmten Betrachtungswinkel ist der Farbeindruck der optisch variablen Schicht an den Farbeindruck der Farbschicht angepasst. Insbesondere ist der Farbeindruck der optisch variablen Schicht bei diesem Betrachtungswinkel derart an den Farbeindruck der Farbschicht angepasst, dass für den Betrachter die beiden Farbeindrücke gleich erscheinen. Bezogen auf die Schichtenfolge Farbschicht - Metallschicht der farbkonstanten Schicht erfolgt die Betrachtung des Sicherheitselements dabei zweckmäßigerweise von der Seite der Farbschicht her, also mit der in dieser Anmeldung verwendeten Konvention, von oben.

Die erfindungsgemäße Kombination der optisch variablen Schicht mit der Farbschicht wirkt optisch attraktiv, ist für den Benutzer selbsterklärend und weist darüber hinaus eine hohe Fälschungssicherheit auf. Die unmittelbare Nachbarschaft von farbvariablem und farbkonstantem Bereich verstärkt die optische Auffälligkeit und lenkt so die Aufmerksamkeit des Betrachters auf das Sicherheitselement. Der farbkonstante Bereich bildet dabei gleichzeitig einen visuell ruhenden Pol und einen Vergleichspunkt für den farbvariablen Bereich bei der Echtheitsprüfung. Eine Kombination der beiden Farbeffekte in unmittelbarer Nachbarschaft erschwert eine Nachstellung des Sicherheitselements, da frei verfügbare Farben oder Folien mit Farbkippeffekten nicht mehr direkt verwendet werden können. Bei einer Anordnung der Farbschicht über der optisch variablen Schicht durchläuft das von der Farbschicht reflektierte Licht nicht, wie bei vorbekannten Sicherheitselementen, zunächst die optisch variable Schicht, wodurch der Farbeindruck der Farbschicht unter unterschiedlichen Betrachtungsbedingungen in hohem Maße stabil bleibt.

Durch das erfindungsgemäße Anordnen einer Metallschicht unterhalb der Farbschicht wird ein Lichtverlust verhindert. Lichtanteile, welche bei der Beleuchtung der Farbschicht nicht von dieser reflektiert werden, sondern die Farbschicht durchdringen, werden von der Metallschicht reflektiert und verstärken somit die Helligkeit des Farbeindrucks der Farbschicht für den Betrachter. Damit werden durch die erfindungsgemäße Anordnung der Metallschicht Lichtverluste minimiert. Dies gilt insbesondere, wenn die Farbschicht als semitransparente Farbschicht ausgebildet ist. Durch die erfindungsgemäβe Metallschicht wird damit verhindert, dass die Farbschicht für den Betrachter als zu dunkel erscheint, wodurch insbesondere die Anpassung des Farbeindrucks der Farbschicht an den Farbeindruck der optisch variablen Schicht bei Betrachtung unter dem vorbestimmten Betrachtungswinkel verbessert werden kann.

Wie bereits vorstehend erwähnt, kann die Farbschicht in einer Ausführungsform nach der Erfindung als semitransparente Farbschicht gestaltet sein. Der Einsatz einer semitransparenten Farbschicht bewirkt im Vergleich zur Verwendung einer deckenden Farbschicht eine deutlich stärkere Angleichung der Farbeindrücke der optisch variablen Schicht und des Überdeckungsbereichs unter den vorbestimmten Betrachtungswinkeln. Insbesondere können unvermeidliche Farbschwankungen der optisch variablen Schicht innerhalb einer Fertigungsserie aufgefangen und die Brillanz und der Glanz im Überdeckungsbereich an die für optisch variable Schichten typischen hohen Werte angeglichen werden. In einer bevorzugten Ausgestaltung weist die semitransparente Farbschicht eine Lichtdurchlässigkeit zwischen 60% und 95%, besonders bevorzugt zwischen 80% und 95% auf. Die semitransparente Farbschicht ist vorteilhafterweise mit löslichem Farbstoff oder gut dispergiertem Pigment gebildet.

Die semitransparente Farbschicht kann auf verschiedene Weise aufgebracht werden, mit Vorteil ist sie auf die Metallschicht oder ein Kunststoffsubstrat aufgedruckt, beispielsweise im Siebdruckverfahren. Die semitransparente Farbschicht kann beispielsweise als gerasterte Farbschicht gestaltet sein. Eine derartige gerasterte Farbschicht kann ein Negativraster, ein Positivraster oder ein Strichraster aufweisen.

Um zusätzliche Merkmale in das Sicherheitselement einzubringen, liegt die semitransparente Farbschicht in bevorzugten Ausgestaltungen in Form von Zeichen, Mustern oder Codierungen vor. Die semitransparente Farbschicht kann auch Aussparungen in Form von Zeichen, Mustern oder Codierungen aufweisen.

Ein besonders ansprechender Effekt lässt sich erzielen, wenn die optisch variable Schicht und die Farbschicht so aufeinander abgestimmt sind, dass bei senkrechter Betrachtung des Sicherheitselements der Farbeindruck der optisch variablen Schicht im Wesentlichen dem Farbeindruck der Farbschicht entspricht. Dabei zeigt sich bei der ersten Erfindungsvariante der Farbeindruck der optisch variablen Schicht außerhalb des Überdeckungsbereichs und der Farbeindruck der oben liegenden Farbschicht im Überdeckungsbereich, während sich bei der zweiten Erfindungsvariante der Farbeindruck der oben liegenden optisch variablen Schicht im Überdeckungsbereich und der Farbeindruck der Farbschicht außerhalb des Überdeckungsbereichs zeigt. Bei senkrechter Betrachtung, die sich oft bei der ersten Wahrnehmung eines auf einen Wertgegenstand aufgebrachten Sicherheitselements ergibt, vermitteln der farbvariable und der farbkonstante Bereich so zunächst im Wesentlichen denselben Farbeindruck. Beim Kippen des Sicherheitselements ändert sich der Farbeindruck im farbvariablen Bereich, während er im farbkonstanten Überdeckungsbereich unverändert bleibt.

In der ersten Erfindungsvariante grenzt in einer Ausführungsform der Erfindung die Metallschicht im Überdeckungsbereich unmittelbar an die Farbschicht an. Die Farbschicht ist damit unmittelbar über der Metallschicht angeordnet. Damit wird erreicht, dass die Farbschicht durchdringendes Licht mit besonders hoher Effizienz in die Farbschicht zurückreflektiert wird. Weiterhin ist es vorteilhaft, wenn die Metallschicht im Überdeckungsbereich unmittelbar an die optisch variable Schicht angrenzt, d.h. die Metallschicht ist im Überdeckungsbereich unmittelbar über der optisch variablen Schicht angeordnet. Damit wird der Übergang zwischen dem Überdeckungsbereich und dem angrenzenden, nicht von der Farbschicht überdeckten Bereich der optisch variablen Schicht optisch möglichst unauffällig gestaltet. In einer bevorzugten Ausführungsform nach der Erfindung sind die optisch variable Schicht, die Metallschicht und die Farbschicht im Überdeckungsbereich unmittelbar aufeinanderfolgende Schichten einer Sandwichstruktur. Vorteilhafterweise sind nicht von der Farbschicht überdeckte Bereiche der optisch variablen Schicht auch nicht von der Metallschicht überdeckt.

Die optisch variable Schicht kann in beiden Erfindungsvarianten aus einer Einzelschicht bestehen. In diesem Fall weist die optisch variable Schicht vorzugsweise flüssigkristallines Material, insbesondere cholesterisches flüssigkristallines Material, auf. In einer Ausführungsform ist die optisch variable Schicht vollständig aus flüssigkristallinem Material gestaltet. Vorzugsweise liegt das flüssigkristalline Material als flüssigkristallines Polymermaterial oder in Form von in eine Bindemittelmatrix eingebetteten Pigmenten vor.

Die Wirkungsweise von cholesterischen Flüssigkristallen kennt der Fachmann beispielsweise aus EP 1 833 034 A1. In einer darin beschriebenen Ausführungsform einer cholesterischen Flüssigkristallschicht weist diese mehrere übereinander angeordnete Ebenen auf, in denen jeweils die Flüssigkristalle gleich ausgerichtet sind. Die Orientierung der Flüssigkristalle variiert schrittweise von Ebene zu Ebene und zwar derart, dass sich eine dreidimensionale spiralförmige Gesamtstruktur ergibt. Diese ist durch eine vertikale Periodenlänge P gekennzeichnet, innerhalb der die Orientierung der Flüssigkristalle sich um 360° dreht. Zirkulär polarisiertes Licht mit einer vorbestimmten Rotationsrichtung und einer mittleren Wellenlänge λₛ wird von der Flüssigkristallschicht reflektiert, wenn das Licht die Gleichung λₛ = n x P erfüllt, wobei n der Brechungsindex der Flüssigkristallschicht ist. Linear polarisiertes Licht hingegen wird von der Flüssigkristallschicht transmittiert. Die effektive Periodenlänge P ändert sich abhängig vom Betrachtungswinkel. Damit ändert sich auch die mittlere Wellenlänge λₛ des reflektierten Lichtes und somit der Farbeindruck der Flüssigkristallschicht abhängig vom Betrachtungswinkel. So kann zum Beispiel eine cholesterische Flüssigkristallschicht bei vertikaler Betrachtung rot erscheinen, während der Farbeindruck sich zu Orange, Gelb, Grün, Blau-Grün und Blau verändert, wenn sich der Betrachtungswinkel verändert.

In einer weiteren Variante der Erfindung besteht die optisch variable Schicht aus mehreren Teilschichten. In dieser Variante ist die optisch variable Schicht durch ein Dünnschichtelement mit Farbkippeffekt gebildet. Das Dünnschichtelement enthält vorzugsweise eine Reflexionsschicht, eine Absorberschicht und eine zwischen der Reflexionsschicht und der Absorberschicht angeordnete dielektrische Abstandsschicht. Der Farbkippeffekt beruht bei solchen Dünnschichtelementen auf betrachtungswinkelabhängigen Interferenzeffekten, die durch Mehrfachreflexionen in den verschiedenen Teilschichten des Elements hervorgerufen werden. Der Wegunterschied des an den verschiedenen Schichten reflektierten Lichts hängt einerseits von der optischen Dicke der dielektrischen Abstandsschicht ab, die den Abstand zwischen Absorberschicht und Reflexionsschicht festlegt, und variiert andererseits mit dem jeweiligen Betrachtungswinkel.

Da der Wegunterschied in der Größenordnung der Wellenlänge des sichtbaren Lichts liegt, ergibt sich aufgrund von Auslöschung und Verstärkung bestimmter Wellenlängen ein winkelabhängiger Farbeindruck für den Betrachter. Durch eine geeignete Wahl von Material und Dicke der dielektrischen Abstandsschicht können eine Vielzahl unterschiedlicher Farbkippeffekte gestaltet werden, beispielsweise Kippeffekte, bei denen sich der Farbeindruck mit dem Betrachtungswinkel von Grün nach Blau, von Blau nach Magenta oder von Magenta nach Grün ändert.

Die Reflexionsschicht des Dünnschichtelements ist vorzugsweise durch eine opake oder durch eine semitransparente Metallschicht gebildet. Als Reflexionsschicht kann eine zumindest bereichsweise magnetische Schicht verwendet werden, so dass ein weiteres Echtheitsmerkmal integriert werden kann, ohne eine zusätzliche Schicht im Schichtaufbau zu erfordern.

Die Reflexionsschicht kann auch Aussparungen in Form von Mustern, Zeichen oder Codierungen aufweisen, die transparente oder semitransparente Bereiche in dem Dünnschichtelement bilden. In den transparenten oder semitransparenten Aussparungsbereichen bietet sich dem Betrachter ein auffälliger Kontrast zu dem umgebenden Farbkippeffekt. Insbesondere können die Muster, Zeichen oder Codierungen im Durchlicht hell aufleuchten, wenn das Dünnschichtelement auf einen transparenten Träger aufgebracht ist.

Die dielektrische Abstandsschicht kann teilweise absorbierend ausgebildet sein und ist vorzugsweise durch eine Druckschicht oder durch eine ultradünne Folie, insbesondere eine gereckte Polyester-Folie, gebildet.

Alternativ oder zusätzlich zu Aussparungen in der Reflexionsschicht können auch die Absorberschicht und/ oder die Abstandsschicht Aussparungen in Form von Mustern, Zeichen oder Codierungen aufweisen. In den ausgesparten Bereichen der Absorberschicht oder der Abstandsschicht tritt kein Farbkippeffekt auf.

In einer vorteilhaften Ausführungsform enthält das Dünnschichtelement zumindest zwei Absorberschichten und zumindest zwei dielektrische Abstandsschichten, wobei die Absorberschichten und die dielektrischen Abstandsschichten alternierend übereinander angeordnet sind. In einer weiteren Variante enthält das Dünnschichtelement mehrere dielektrische Abstandsschichten, wobei aneinander angrenzende Schichten der dielektrischen Abstandsschichten stark unterschiedliche Brechungsindizes aufweisen; die Brechungsindizes der aneinander angrenzenden dielektrischen Abstandsschichten unterscheiden sich um wenigstens 0,03.

In einer weiteren Variante besteht die optisch variable Schicht aus einer Schicht, die die Dünnschichtelemente mit Farbkippeffekt in Form von Pigmenten enthält. Vorzugsweise wird die optisch variable Schicht aufgedruckt, wobei diese die Pigmente in einem transparenten Bindemittel enthält.

In der ersten Erfindungsvariante ist in einer weiteren Ausführungsform der Erfindung zwischen der optisch variablen Schicht und der Metallschicht eine Schutzschicht angeordnet. Diese Schutzschicht kann z.B. durch einen Klarlack gebildet werden. Die optisch variable Schicht kann damit vor mechanischen Einwirkungen wirksam geschützt werden. Die Metallschicht grenzt in diesem Fall im Überdeckungsbereich nicht unmittelbar an die optisch variable Schicht an. Vielmehr sind die beiden Schichten durch die Schutzschicht getrennt.

In einer weiteren Ausführungsform nach der Erfindung ist in die optisch variable Schicht ein diffraktives Prägemuster eingeprägt. Das diffraktive Prägemuster ist vorzugsweise als Prägehologramm gestaltet. Somit lassen sich beispielsweise sogenannte Color-Shift-Hologramme verwirklichen, bei denen der Farbkippeffekt der optisch variablen Schicht mit einem holographischen Effekt kombiniert ist.

Vorzugsweise ist das diffraktive Prägemuster in eine der Metallschicht zugewandten Oberfläche der optisch variablen Schicht eingeprägt. Vorteilhafterweise erstreckt sich das diffraktive Prägemuster über die gesamte Oberfläche des Sicherheitselements und damit sowohl im Überdeckungsbereich als auch in Bereichen der optisch variablen Schicht, die nicht von der Metallschicht bzw. der Farbschicht überdeckt sind. Durch das Einprägen des diffraktiven Prägemusters in eine der Metallschicht zugewandten Oberfläche der optisch variablen Schicht wird die Topographie des Prägemuster durch die Metallschicht sowie ggf. die darauf angeordnete Farbschicht durchgedrückt und damit in der Metallschicht ein dem Prägemuster entsprechendes Relief erzeugt. Damit wird die diffraktive Wirkung des Prägemusters auf einfallendes Licht mittels des in der Metallschicht erzeugten Reliefs bewirkt. In einer vorteilhaften Ausführungsform bildet das diffraktive Prägemuster ein Gitterbild zur Darstellung eines Echtfarbenbildes, das eine Mehrzahl von Echtfarbengebieten aufweist, die bei Beleuchtung des Gitterbilds in einer gewünschten Echtfarbe leuchten.

In einer weiteren Ausführungsform nach der Erfindung weist das Sicherheitselement ein Substrat auf, welches die optisch variable Schicht trägt. Dieses Substrat kann insbesondere durch eine Trägerfolie aus Kunststoff, beispielsweise durch eine transparente PET-Folie, gebildet sein.

In einer weiteren Ausführungsform nach der Erfindung ist zwischen dem Substrat und der optisch variablen Schicht eine weitere Farbschicht angeordnet, welche absorbierend wirkt. Alternativ kann eine derartige absorbierende Farbschicht auf einer bezüglich der optisch variablen Schicht abgewandten Seite des Substrats angeordnet sein. In diesem Fall ist dann die optisch variable Schicht vorzugsweise unmittelbar auf dem Substrat angeordnet.

In einer weiteren vorteilhaften Ausführungsform nach der Erfindung sind das Substrat und die Farbschicht, welche die optisch variable Schicht überdeckt, auf der gleichen Seite bezüglich der optisch variablen Schicht angeordnet. Vorzugsweise ist das Substrat derart angeordnet, dass es die Farbschicht überdeckt. So kann das Substrat etwa unmittelbar auf die Farbschicht aufgebracht werden.

In einer weiteren Ausführungsform nach der Erfindung ist in einem weiteren Überdeckungsbereich über der optisch variablen Schicht eine nicht von der Farbschicht bedeckte Metallschicht angeordnet, welche insbesondere von einem transparenten Resistlack überdeckt ist. Dies ermöglicht eine interessante Designvariante, bei der das Sicherheitselement drei verschiedene Farbbereiche aufweist, nämlich einen durch die Farbschicht geprägten Bereich, einen durch die optisch variable Schicht geprägten Bereich sowie einen Bereich, der durch die Metallschicht geprägt ist. Gemäß einer interessanten Herstellungsvariante wird zunächst die Metallschicht auf die optisch variable Schicht aufgebracht. Daraufhin wird die Farbschicht auf einen ersten Überdeckungsbereich und der transparente Resistlack auf einen weiteren Überdeckungsbereich aufgebracht. Daraufhin erfolgt eine Ätzdemetallisierung der Oberfläche, was dazu führt, dass die Metallschicht lediglich in dem weder von der Farbschicht noch von dem transparenten Resist überdeckten Bereich entfernt wird. Das Ergebnis ist ein Sicherheitselement mit den vorgenannten drei Farbbereichen.

In der zweiten Erfindungsvariante sind die optisch variable Schicht und die farbkonstante Schicht vorzugsweise auf gegenüberliegenden Seiten eines transparenten oder transluzenten Substrats angeordnet. Die Farbschicht kann durch eine farbige Druckschicht oder auch durch eine farbige Resistlackschicht gebildet sein.

Über der optisch variablen Schicht kann in beiden Erfindungsvarianten eine strukturierte, transparente Schicht aufgebracht sein, die den Austrittswinkel des von der optisch variablen Schicht reflektierten Lichts verändert. Die strukturierte Schicht besteht insbesondere aus einer Reihe paralleler linearer Mikroprismen oder einer Rasteranordnung aus quadratischen Pyramiden, Tetraedern oder Würfeleckstrukturen, wobei die einzelnen Elemente jeweils eine Größe bzw. einen Periodenabstand im Bereich von 1 µm bis zu 150 µm aufweisen.

Die Mikroprismen, Pyramiden, Tetraeder bzw. Würfeleckstrukturen erzeugen dabei eine Vielzahl kleiner Facetten in der strukturierten Schicht. Das Vorhandensein der strukturierten Schicht führt dann dazu, dass Licht, das ohne die strukturierte Schicht aufgrund seines flachen Auffallwinkels in der optisch variablen Schicht intern reflektiert würde, unter einem steileren Winkel auf eine der Facetten der strukturierten Schicht auftrifft und das Sicherheitselement verlassen kann. Dadurch kann der reflektierte Farbbereich der optisch variablen Schicht erweitert werden, wie weiter unten genauer erläutert. Weitere Einzelheiten zur Funktionsweise und den möglichen Ausgestaltungen der strukturierten Schicht können der Druckschrift WO 2009/066048 A1 entnommen werden, deren Offenbarung insoweit in die vorliegenden Anmeldung aufgenommen wird.

In beiden Erfindungsvarianten ist das Sicherheitselement bevorzugt ein Sicherheitsfaden, ein Sicherheitsband, ein Sicherheitsstreifen, ein Patch, ein Etikett oder ein anderes Transferelement zum Aufbringen auf ein Sicherheitspapier, Wertdokument oder dergleichen.

In einer vorteilhaften Ausführungsform des erfindungsgemäßen Verfahrens ist die Farbschicht als Resistlack ausgebildet. Gemäß der Ausführungsform wird zunächst die Metallschicht durch vollflächiges Metallisieren der optisch variablen Schicht ausgebildet und daraufhin die Farbschicht in zumindest dem Überdeckungsbereich auf die Metallschicht aufgebracht. Danach wird die Metallschicht in einem nicht von der Farbschicht überdeckten Bereich durch Ätzdemetallisierung entfernt. Da die Farbschicht als Resistlack ausgebildet ist, schützt während des Ätzschritts die Farbschicht die Metallisierung im Überdeckungsbereich, wodurch die erfindungsgemäße Metallschicht zwischen der Farbschicht und der optisch variablen Schicht erhalten bleibt.

In einer weiteren Ausführungsform nach der Erfindung wird vor dem Anordnen der Farbschicht über der optisch variablen Schicht in dem Überdeckungsbereich eine Waschfarbe auf der optisch variablen Schicht außerhalb des Überdeckungsbereichs angeordnet. Daraufhin wird die optisch variable Schicht mit der darauf angeordneten Waschfarbe zur Ausbildung der Metallschicht vollflächig metallisiert, und die Farbschicht wird vollflächig auf die Metallschicht aufgebracht. Danach wird mittels einer die Farbschicht durchdringenden Waschflüssigkeit die Waschfarbe derart ausgewaschen, dass im Bereich der Waschfarbe die Farbschicht zusammen mit der Metallschicht entfernt wird. Vorzugsweise wird die Farbschicht auf die Metallschicht aufgedruckt. Hinsichtlich Details zur Ausgestaltung der Demetallisierung mittels der Waschfarbe kann beispielsweise auf EP 1 023 499 B1 Bezug genommen werden.

In einer weiteren Ausführungsform nach der Erfindung wird die optisch variable Schicht durch flüssigkristallines Material gebildet, und in das flüssigkristalline Material wird ein diffraktives Prägemuster eingeprägt. Vorzugsweise wird vor dem Einprägen des Prägemusters das flüssigkristalline Material vorvernetzt und nach dem Prägevorgang nachvernetzt. Das Nachvernetzen kann beispielsweise mittels UV-Bestrahlung erfolgen. Alternativ zum Vorvernetzen vor der Prägung kann ein bei der Prägung verwendetes Prägewerkzeug sogenannte alignmentfähige Strukturen aufweisen, die der Prägestruktur überlagert sind. Derartige alignmentfähige Strukturen sorgen dafür, dass eine Ausrichtung der Flüssigkristalle bei der Prägung erfolgt. Insbesondere ist es vorteilhaft, wenn das Prägewerkzeug eine geeignete Oberflächenbehandlung erfährt, die dazu führt, dass eine Vernetzung der Flüssigkristalle während der Prägung eintritt.

In einer weiteren Ausführungsform nach der Erfindung wird vor dem Einprägen des diffraktiven Prägemusters in das flüssigkristalline Material ein Substrat mit einer absorbierenden Farbschicht versehen. Daraufhin wird die absorbierende Farbschicht vorstrukturiert und mit dem flüssigkristallinen Material beschichtet. Beim Aufbringen der Flüssigkristalle auf die vorstrukturierte Farbschicht erfahren die Flüssigkristalle ein Alignment bzw. eine Ausrichtung, wodurch eine Vorvernetzung der Flüssigkristalle erfolgt. Nach dem Einprägen des diffraktiven Prägemusters erfolgt vorteilhafterweise ein Nachvernetzungsschritt.

Das Vorstrukturieren der absorbierenden Farbschicht kann erfindungsgemäß durch ein Reiben der Farbschicht mit einem Stoff und/ oder durch eine geeignete Belichtung der Farbschicht erfolgen.

In einer weiteren Ausführungsform nach der Erfindung wird das Substrat mit einem die optisch variable Schicht bildenden flüssigkristallinen Material beschichtet. Weiterhin wird auf eine zu dieser Beschichtung entgegengesetzten Seite des Substrats eine absorbierende Farbschicht aufgedruckt. Nach der Beschichtung wird das diffraktive Prägemuster in das flüssigkristalline Material eingeprägt.

In einer weiteren vorteilhaften Ausführungsform nach der Erfindung wird die optisch variable Schicht vor dem Einprägen des diffraktiven Prägemusters auf ein Substrat, wie etwa eine Trägerfolie, transferiert. Damit wird die Formstabilität der optisch variablen Schicht während des Prägevorgangs gewährleistet und etwa ein Einreißen der optisch variablen Schicht verhindert.

In einer weiteren Ausführungsform wird die optisch variable Schicht nach dem Anordnen der Metallschicht sowie der Farbschicht auf der optisch variablen Schicht farbschichtseitig auf ein Substrat aufgebracht. In diesem Fall sollte das Sicherheitselement von der Substratseite her betrachtet werden. Das Sicherheitselement wird in dieser Ausführungsform durch das Substrat in besonderer Weise vor Verunreinigung oder Beschädigung geschützt.

Für alle Ausführungsformen und Beispiele an erfindungsgemäßen Sicherheitselementen gilt, dass das Sicherheitselement zerkleinert, z. B. gestanzt, und als Pigment verarbeitet werden kann. Die Pigmente lassen sich z. B. zu Druckfarben weiterverarbeiten.

Die bezüglich der vorstehend aufgeführten Ausführungsformen des erfindungsgemäßen Sicherheitselements angegebenen Merkmale können entsprechend auf das erfindungsgemäße Herstellungsverfahren übertragen werden, und umgekehrt.

Weitere Ausführungsbeispiele sowie Vorteile der Erfindung werden nachfolgend anhand der beigefügten schematischen Zeichnungen erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer Banknote mit einem eingebetteten erfindungsgemäßen Sicherheitsfaden und einem aufgeklebten erfindungsgemäßen Transferelement,
- Fig. 2: eine Draufsicht auf einen Teilbereich des Sicherheitsfadens von Fig.1 in einer ersten Ausführungsform nach der Erfindung,
- Fig. 3: einen Querschnitt durch den Sicherheitsfaden von Fig. 2 entlang der Linie III-III,
- Fig. 4: eine zweite Ausführungsform des Sicherheitsfadens nach der Erfindung im Querschnitt,
- Fig. 5: eine dritte Ausführungsform des Sicherheitsfadens nach der Erfindung im Querschnitt,
- Fig. 6: eine vierte Ausführungsform des Sicherheitsfadens nach der Erfindung im Querschnitt,
- Fig. 7: eine fünfte Ausführungsform des Sicherheitsfadens nach der Erfindung im Querschnitt,
- Fig. 8: eine Veranschaulichung der Herstellung einer sechsten Ausführungsform des Sicherheitsfadens nach der Erfindung, wobei Fig. 8a den Sicherheitsfaden in einem Zustand während der Herstellung und Fig. 8b den Sicherheitsfaden im Endzustand zeigt,
- Fig.9: ein Sicherheitselement nach einem anderen Ausführungsbeispiel der Erfindung im Querschnitt, sowie
- Fig. 10: ein Sicherheitselement nach einem weiteren Ausführungsbeispiel der Erfindung im Querschnitt.

In den nachstehend beschriebenen Ausführungsbeispielen sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

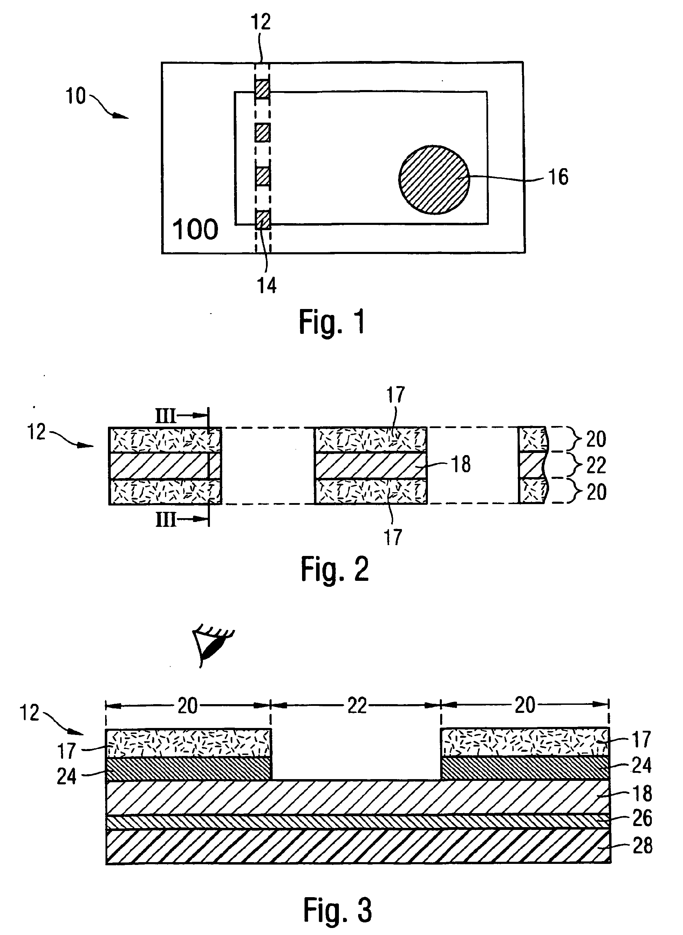

Die Erfindung wird nun am Beispiel einer Banknote näher erläutert. Fig.1 zeigt dazu eine schematische Darstellung einer Banknote 10 mit zwei Sicherheitselementen 12 und 16, die jeweils nach einem Ausführungsbeispiel der Erfindung gebildet sind. Das erste Sicherheitselement stellt einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Nachstehend wird der Aufbau des Sicherheitsfadens 12 in verschiedenen erfindungsgemäßen Ausführungsformen erläutert. Das Transferelement 16 kann analog dieser Ausführungsformen ausgebildet werden.

Der Aufbau des Sicherheitsfadens 12 in einer ersten Ausführungsform wird anhand der Figuren 2 und 3 näher erläutert. Fig. 2 zeigt dabei eine Draufsicht auf einen Teilbereich des Sicherheitsfadens 12, Fig. 3 stellt einen Querschnitt durch den Sicherheitsfaden 12 entlang der Linie III-III der Fig. 2 dar.

Wie aus Fig. 3 ersichtlich, umfasst der Sicherheitsfaden 12 ein als Trägerschicht dienendes Substrat 28 in Gestalt einer transparenten Trägerfolie, die z. B. als PET-Folie ausgebildet sein kann. Das Substrat 28 ist mit einer absorbierenden Farbschicht 26 beschichtet. Darauf befindet sich eine optisch variable Schicht in Gestalt einer cholesterischen Flüssigkristallschicht 18. Die Flüssigkristallschicht 18 ist zur Erzeugung eines Farbkippeffekts gestaltet, d.h. unter unterschiedlichen Betrachtungswinkeln vermittelt die Flüssigkristallschicht 18 unterschiedliche Farbeindrücke. Zur Funktionsweise der cholesterischen Flüssigkristallschicht wird auf die EP 1833034 A1 sowie vorstehende Erklärungen Bezug genommen.

Abschnitte des Sicherheitsfadens 12 bilden Überdeckungsbereiche 20, in denen jeweils eine semitransparente Farbschicht 17 über der Flüssigkristallschicht 18 angeordnet ist. Zwischen der Flüssigkristallschicht 18 und der semitransparenten Farbschicht 17 ist jeweils eine Metallschicht 24 angeordnet. In dem unmittelbar an die Überdeckungsbereiche 20 angrenzenden, nicht überdeckten Bereich 22 ist die Flüssigkristallschicht 18 frei von der Farbschicht 17 sowie der Metallschicht 24.

Die Flüssigkristallschicht 18 und die Farbschicht 17 zusammen mit der darunter angeordneten Metallschicht 24 sind derart aufeinander abgestimmt, dass sie bei senkrechtem Betrachtungswinkel im Wesentlichen denselben Farbeindruck hervorrufen. Der Farbeindruck der Flüssigkristallschicht 18 bei senkrechtem Betrachtungswinkel wird nachfolgend auch als senkrechte Kippfarbe bezeichnet.

Beim Kippen des Sicherheitsfadens 12 verändert sich der Farbeindruck der Flüssigkristallschicht 18 im nicht überdeckten Bereich 22, während der Farbeindruck in den Überdeckungsbereichen 20 unverändert bleibt. Durch eine solche Kombination eines farbvariablen Bereichs mit einem farbkonstanten Bereich in unmittelbarer Nachbarschaft wird die visuelle Auffälligkeit des Farbkippeffekts noch wesentlich verstärkt, da das menschliche Auge auf die auftretenden Farbunterschiede stärker reagiert als auf die Farbveränderung an sich. Das Augenmerk des Betrachters wird daher noch stärker auf das Sicherheitsmerkmal gezogen. Die Wirkungsweise des Sicherheitselements ist darüber hinaus selbsterklärend, so dass es ohne Weiteres von jedermann einfach auf Echtheit geprüft werden kann.

Die Kombination eines farblich ruhigen Elements mit einem Farbkippelement wird allgemein als optisch sehr ansprechend empfunden. Für potentielle Fälscher bedeutet die Kombination der beiden Farbeffekte in unmittelbarer Nachbarschaft eine deutliche Erschwerung der Nachstellung, da frei verfügbare Farben oder Folien mit Farbkippeffekten nicht mehr direkt verwendet werden können.

Durch die Anordnung der Metallschicht 24 unter der jeweiligen semitransparenten Farbschicht 17 wird Licht, welches die Farbschicht 17 durchdringt, wieder in die Farbschicht 17 zurückreflektiert. Dies führt dazu, dass der Lichtverlust beim Betrachten der Farbschicht 17 minimiert wird und die Farbschicht 17 dadurch heller erscheint. Die Anpassung des Farbeindrucks und insbesondere der Brillanz der Farbschichten 17 an den Farbeindruck bzw. die Brillanz der Flüssigkristallschicht 18 im nicht überdeckten Bereich 22 wird damit verbessert.

Bei der Herstellung des Sicherheitsfadens 12 gemäß den Figuren 2 und 3 wird in einer Ausführungsform zunächst das Substrat 28 mit der absorbierenden Farbschicht 26 beschichtet. Daraufhin wird die cholesterische Flüssigkristallschicht 18 vollflächig auf das beschichtete Substrat 28 auftransferiert. Danach wird die cholesterische Flüssigkristallschicht 18 vollflächig metallisiert. Auf die Metallisierung wird mit der gewünschten Fixfarbe 17, die als Resistlack ausgebildet ist, ein Motiv gedruckt.

Daraufhin erfolgt eine Ätzdemetallisierung. In nicht von der Farbschicht überdeckten Bereichen 22 wird damit die Flüssigkristallschicht 18 wieder freigelegt. Eine Weiterverarbeitung z. B. mit Heißsiegelschichten, Magnet, rückseitiger Metallisierung, lumineszierenden Farben etc. kann daraufhin ohne besondere Anforderungen erfolgen.

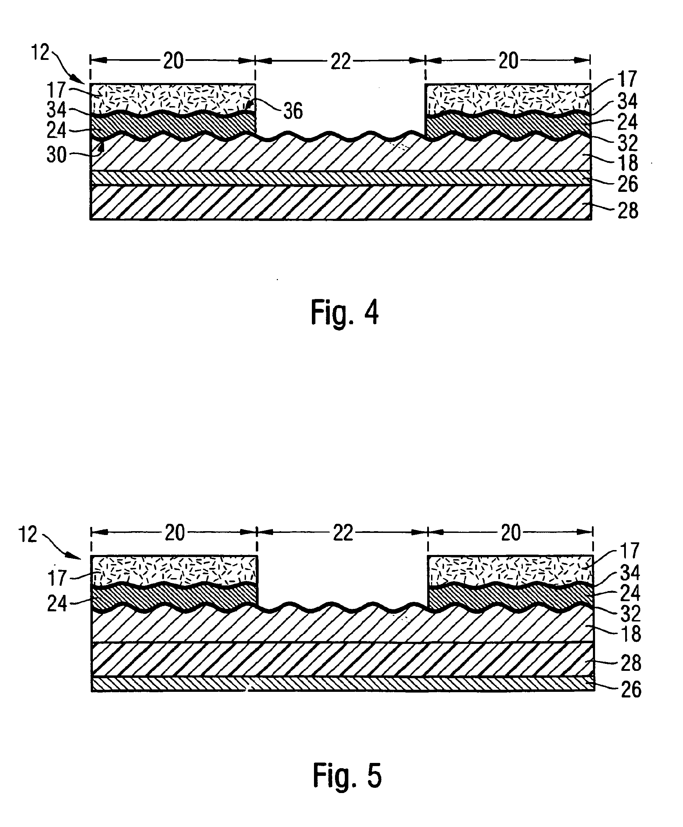

Fig. 4 zeigt den Sicherheitsfaden 12 in einer weiteren erfindungsgemäßen Ausführungsform. Diese Ausführungsform unterscheidet sich von der in den Figuren 2 und 3 gezeigten Ausführungsform darin, dass in die dem Betrachter bzw. der Metallschicht 24 zugewandte Oberfläche 30 der Flüssigkristallschicht 18 eine Mikrostruktur in Gestalt eines diffraktiven Prägemusters 32, beispielsweise zum Erzeugen einer Hologrammstruktur, eingeprägt ist. Das diffraktive Prägemuster 32 führt zu einer Reliefstruktur in der Oberfläche 30 der Flüssigkristallschicht 18. Diese Reliefstruktur in der Oberfläche 30 führt zu einem entsprechenden Relief 34 an der an die Farbschicht 17 angrenzenden Oberfläche 36 der Metallschicht 24. Damit ermöglicht das diffraktive Prägemuster 30 eine durchgängige Darstellung weiterer optischer Strukturen, wie etwa der vorstehend genannten Hologrammstrukturen, für den Betrachter. In den Überdeckungsbereichen 20 fungiert die Metallschicht 24 jeweils als Reflektor für derartige Hologramme. Im nicht überdeckten Bereich 22 dient die Flüssigkristallschicht 18 als Reflektor. Dazu weist die Flüssigkristallschicht 18 im Bereich des Prägemusters 32 ein gewisses Alignment auf, d. h. die Flüssigkristalle weisen hinsichtlich ihrer Orientierung eine Vorzugsrichtung auf.

Das Alignment kann durch ein Vorvernetzen der Flüssigkristallschicht 18 vor dem Prägen derselben erfolgen. Gemäß einem alternativen Herstellungsverfahren gemäß der Erfindung wird zunächst das Substrat 28 mit der absorbierenden Farbschicht 26 beschichtet, daraufhin wird die absorbierende Farbschicht 26 vorstrukturiert und die Flüssigkristallschicht 18 auf die vorstrukturierte Farbschicht 26 aufgebracht. Die absorbierende Farbschicht 26 wirkt dann als Alignmentschicht für die Flüssigkristalle in der Flüssigkristallschicht 18. Weiterhin kann auch noch eine weitere Schicht vorgesehen sein, die zusammen mit der absorbierenden Farbschicht 18 für das Alignment bzw. Ausrichten der Flüssigkristalle sorgt. Das Vorstrukturieren der absorbierenden Farbschicht 26 kann beispielsweise durch ein Reiben mit einem Stoff, wie z.B. Samt, oder mit Bürsten oder durch eine geeignete Belichtung erfolgen. Nach dem Aufbringen der Flüssigkristallschicht 18 auf das Substrat 28 wird die Flüssigkristallschicht 18 vorvernetzt, geprägt und bei Bedarf noch nachvernetzt.

Das Nachvernetzen kann beispielsweise mittels UV-Bestrahlung erfolgen.

Fig. 5 zeigt eine weitere Ausführungsform des Sicherheitsfadens 12 nach der Erfindung. Diese unterscheidet sich von der Ausführungsform gemäß Fig. 4 lediglich darin, dass die absorbierende Farbschicht 26 nicht zwischen der Flüssigkristallschicht 18 und dem Substrat 28, sondern auf der Unterseite des Substrats 28, d.h. der der Flüssigkristallschicht 18 abgewandten Seite des Substrats 28, aufgedruckt ist.

Bei der Herstellung des Sicherheitsfadens 12 gemäß Fig. 5 wird zunächst das Substrat für das Alignment der Flüssigkristalle vorstrukturiert. Daraufhin wird es mit der Flüssigkristallschicht 18 beschichtet, ggf. vorvernetzt, geprägt und mittels UV-Bestrahlung nachvernetzt. Der Vorgang des mechanischen Prägens und des darauffolgenden Nachvernetzens bzw. Aushärtens mittels UV-Bestrahlung wird auch als UV-Prägen bezeichnet. Aufgrund der Tatsache, dass während des UV-Prägens die absorbierende Farbschicht 26 noch nicht vorhanden ist, werden verbesserte UV-Bestrahlungsergebnisse erzielt. Die absorbierende Farbschicht in Gestalt eines meist schwarzen Hintergrunds wird daraufhin nachträglich auf die Rückseite des Substrats 28 gedruckt.

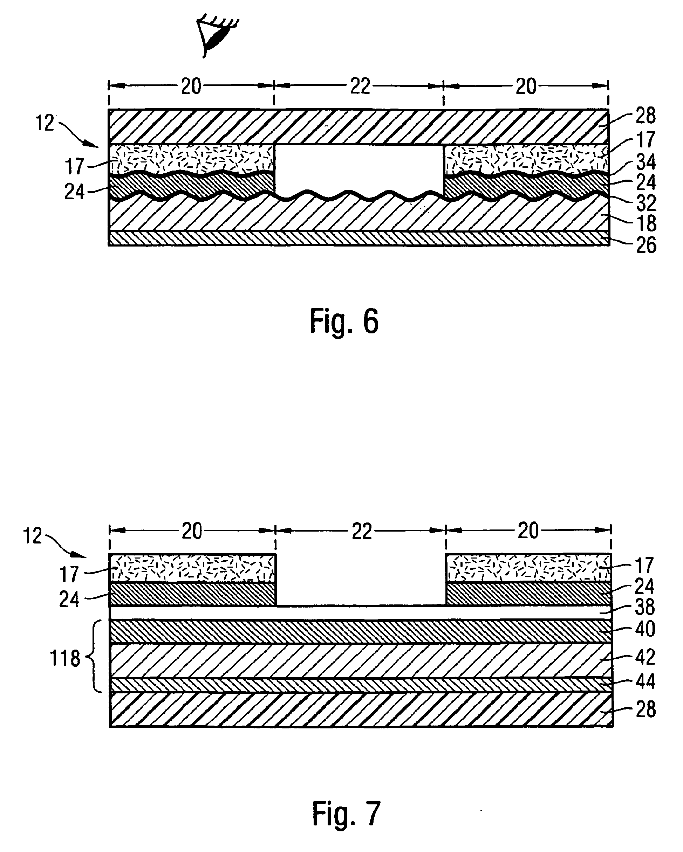

Fig. 6 zeigt eine weitere Ausführungsform des Sicherheitsfadens 12 nach der Erfindung. Diese Ausführungsform unterscheidet sich von der Ausführungsform gemäß Fig. 5 darin, dass das Substrat 28 auf der Betrachtungsseite des Sicherheitsfadens 12 aufgebracht ist. Das Substrat 28 ist dabei direkt auf die Farbschicht 17 aufgebracht. Die absorbierende Farbschicht 26 ist auf die Flüssigkristallschicht 18 von unten her aufgedruckt.

Bei der Herstellung des Sicherheitsfadens 12 gemäß Fig. 6 wird zunächst die Flüssigkristallschicht 18 auf eine in Fig. 6 nicht gezeigte alignmentfähige Trägerfolie, welche identisch zum Substrat 28 ausgeführt sein kann, aufgebracht. Daraufhin wird das diffraktive Prägemuster 32, wie vorstehend beschrieben, in die Flüssigkristallschicht 18 eingeprägt, anschließend die Flüssigkristallschicht 18 vollflächig metallisiert und die Farbschicht 17 in den jeweiligen Überdeckungsbereichen 20 aufgebracht. Danach wird eine Ätzdemetallisierung durchgeführt und die Schichtenanordnung auf ein Substrat 28 transferiert.

Daraufhin wird die alignmentfähige Folie von der Flüssigkristallschicht 18 abgelöst und die absorbierende Farbschicht 26 von unten her auf die Flüssigkristallschicht 18 gedruckt. Mit der Ausführungsform gemäß Fig. 6 werden mögliche durch eine nicht ausreichende Haftungsfähigkeit der Flüssigkristallschicht 18 am Substrat 28 auftretende Probleme vermieden.

In einer weiteren erfindungsgemäßen Ausführungsform des Herstellungsverfahrens des Sicherheitsfadens 12 wird die Flüssigkristallschicht 18 vor dem Einprägen des Prägemusters 32 nicht vorvernetzt. Dafür trägt das zur Prägung verwendete Prägewerkzeug alignmentfähige Strukturen, die dem diffraktiven Prägemuster überlagert sind, damit Flüssigkristalle, die sich beim Prägevorgang in der Nähe der Prägestruktur befinden, eine Ausrichtung erfahren. Zusätzlich kann eine geeignete Oberflächenbehandlung des Prägewerkzeugs die Ausrichtung der Flüssigkristalle begünstigen. In diesem Fall erfolgt die hauptsächliche Vernetzung der Flüssigkristallschicht 18 während der Prägung. Dies kann z. B. durch Elektronenstrahlhärten oder mittels UV-Licht erfolgen. Wenn die Härtung im Bereich des Prägewerkzeugs erfolgt, erübrigt sich die sonst verbreitete Inertisierung der Flüssigkristalle aufgrund eines üblicherweise erfolgenden Sauerstoffausschlusses beim Prägen.

Fig. 7 zeigt eine weitere Ausführungsform eines erfindungsgemäßen Sicherheitsfadens 12. Dieser unterscheidet sich von dem Sicherheitsfaden 12 gemäß Fig. 3 darin, dass die optisch variable Schicht anstatt mittels einer Flüssigkristallschicht 18 in diesem Fall von einem Dünnschichtelement 118 gebildet ist. Das Dünnschichtelement 118 ist direkt auf dem Substrat 28, d. h. ohne eine dazwischen angeordnete absorbierende Farbschicht 26, angeordnet. Das Dünnschichtelement 118 ist an seiner Oberseite mit einer gut metallisierbaren Schicht in Gestalt eines Klarlacks 38 versiegelt.

Darauf ist in den Überdeckungsbereichen 20 die bereits aus den vorhergehenden Ausführungsformen bekannte Kombination aus Metallschicht 24 und Farbschicht 17 angeordnet. Das Dünnschichtelement 118 gemäß Fig. 7 erzeugt wie die Flüssigkristallschicht 18 gemäß den vorstehend erläuterten Ausführungsformen ebenfalls einen Farbkippeffekt. Dazu umfasst das optisch variable Dünnschichtelement 118 eine durch eine opake Aluminiumschicht gebildete Reflexionsschicht 44, eine auf die Reflexionsschicht 44 aufgebrachte ultradünne SiO₂-Abstandsscht 42 sowie eine teiltransparente Absorberschicht 40 aus Chrom. Wie weiter oben erläutert, beruht der Farbkippeffekt des Dünnschichtelements 118 auf Interferenzeffekten durch Mehrfachreflexionen in den verschiedenen Teilschichten 44, 42 und 40 des Elements 118.

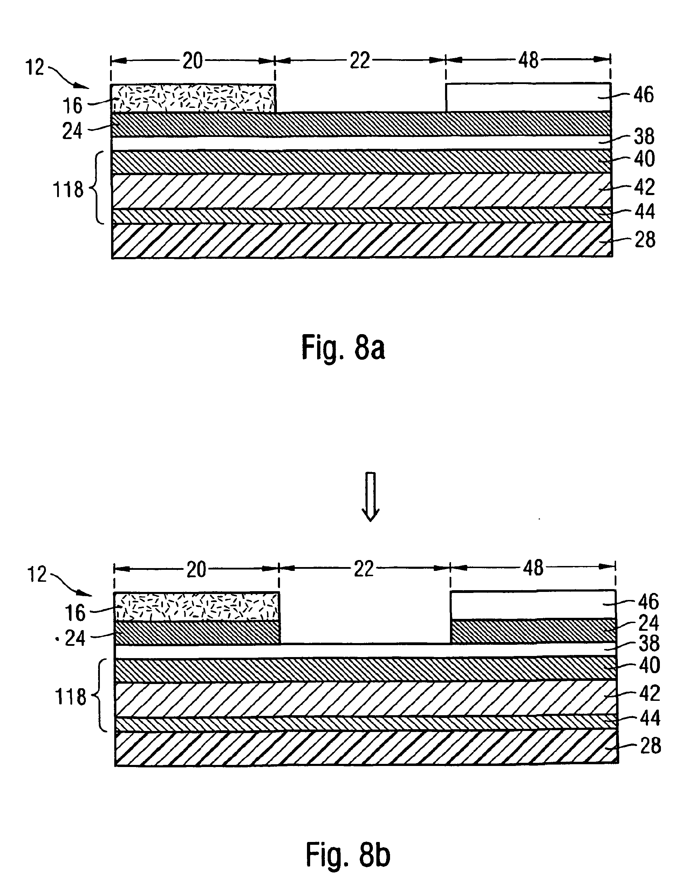

Fig. 8b zeigt eine weitere Variante eines erfindungsgemäßen Sicherheitselements 12 mit einem Dünnschichtelement 118 als optisch variable Schicht. Der Sicherheitsfaden 12 gemäß Fig. 8b unterscheidet sich von der Ausführungsform gemäß Fig. 7 darin, dass neben dem Überdeckungsbereich 20 ein weiterer Überdeckungsbereich 48 vorgesehen ist, in dem das Dünnschichtelement 118 nicht von der Farbschicht 17, sondern von einem farblosen Resistlack 46 überdeckt ist. Zwischen dem farblosen Resistlack 46 und dem Dünnschichtelement 118 ist eine Metallschicht 24 angeordnet.

Fig. 8a veranschaulicht die Herstellung des Sicherheitsfadens 12 gemäß Fig. 8b. Nach vollflächigem Metallisieren des Dünnschichtelements 118 wird die Metallschicht 24 teilweise mit der Farbschicht 17 und teilweise mit dem farblosen Resistlack 46 bedruckt. Bei der nachfolgenden Ätzdemetallisierung wird die Metallschicht 24 im Überdeckungsbereich 48 von dem Resistlack 46 geschützt, so dass im Ergebnis drei Farbbereiche auf dem Sicherheitsfaden 12 erzeugt werden. Diese umfassen die Farbe der Farbschicht 17 im Überdeckungsbereich 20, die Farbe der optisch variablen Schicht 118 im nicht überdeckten Bereich 22 sowie die Farbe der Metallschicht 22 im weiteren Überdeckungsbereich 48.

Alternativ zur vorstehend beschriebenen Ätzdemetallisierung kann die Metallschicht 24 im nicht überdeckten Bereich 22 auch durch Verwendung einer Waschfarbe in Anlehnung an das in EP 1 023 499 B1 beschriebene Verfahren entfernt werden. Dabei wird vor dem Anordnen der Farbschicht 17 über der optisch variablen Schicht 18 bzw. 118 im Überdeckungsbereich 20 eine Waschfarbe auf der optisch variablen Schicht 18 bzw. 118 im nicht überdeckten Bereich 22 angeordnet, daraufhin wird die optisch variable Schicht 18 bzw. 118 mit der darauf angeordneten Waschfarbe zur Ausbildung der Metallschicht 24 vollständig metallisiert und die Farbschicht 17 vollflächig auf die Metallschicht 24 aufgebracht.

Daraufhin wird mittels einer die Farbschicht 17 durchdringenden Waschflüssigkeit die Waschfarbe derart ausgewaschen, dass im Bereich der Waschfarbe die Farbschicht 17 zusammen mit der Metallschicht 24 entfernt wird. Die Farbschicht 17 sollte bei dieser Anwendung derart porös formuliert sein, dass ein Zutritt der Waschflüssigkeit bis zur Waschfarbe möglich ist.

Bei den bisher beschriebenen Ausführungsbeispielen ist die farbkonstante Schicht in dem Überdeckungsbereich über der optisch variablen Schicht angeordnet, so dass sich von unten nach oben die Schichtenfolge optisch variable Schicht - Metallschicht - Farbschicht ergibt. Die Betrachtung erfolgt dabei von oben, also der Seite der Farbschicht der Schichtenfolge her. Zwischen den genannten Schichten können auch weitere Schichten liegen, wie oben bereits erläutert.

In anderen erfindungsgemäßen Gestaltungen ist in dem Überdeckungsbereich die optisch variable Schicht über der Farbschicht der farbkonstanten Schicht angeordnet, so dass sich von unten nach oben die Schichtenfolge Metallschicht - Farbschicht - optisch variable Schicht ergibt. Die Betrachtung erfolgt auch hier von oben, also der Seite der optisch variablen Schicht der Schichtenfolge her. Zwischen den genannten Schichten können weitere Schichten liegen, insbesondere können die optisch variable Schicht und die farbkonstante Schicht auf gegenüberliegenden Seiten eines transparenten oder transluzenten Substrats angeordnet sein.

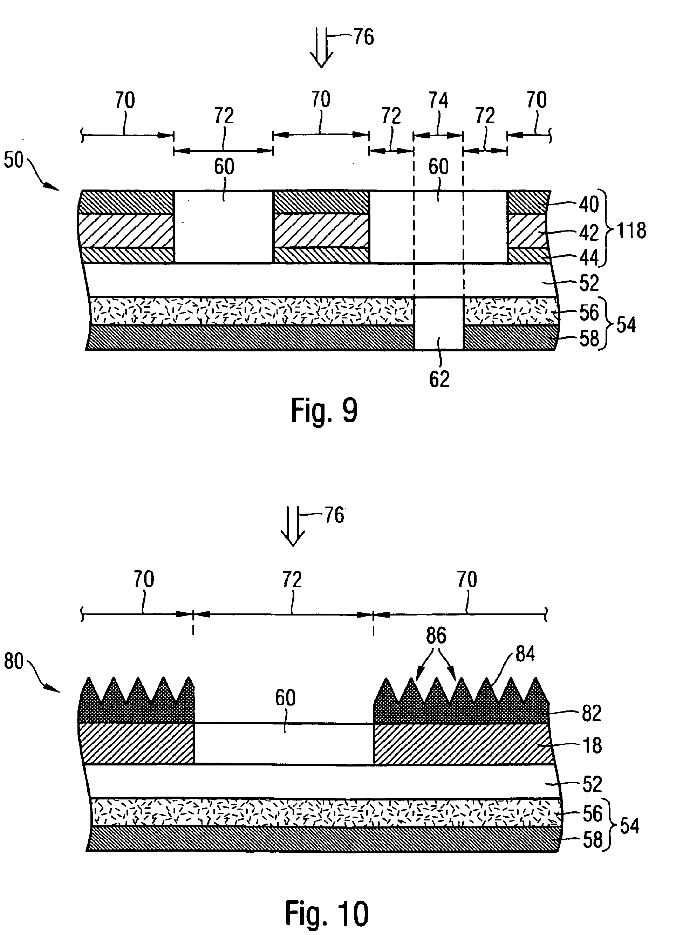

Fig. 9 zeigt hierzu ein Ausführungsbeispiel eines erfindungsgemäßen Sicherheitselements 50 mit einem transparenten PET-Substrat 52, das auf gegenüberliegenden Seiten eine farbkonstante Schicht 54 und eine optisch variable Schicht 118 trägt. Die optisch variable Schicht ist im Ausführungsbeispiel durch ein Dünnschichtelement 118 der in Zusammenhang mit Fig. 7 bereits beschriebenen Art gebildet, das eine Aluminium-Reflexionsschicht 44, eine ultradünne SiO₂-Abstandsschicht 42 sowie eine teiltransparente Absorberschicht 40 aus Chrom enthält.

Die farbkonstante Schicht 54 ist durch eine auf das Substrat 52 aufgedruckte Farbschicht 56, beispielsweise mit einem löslichen Farbstoff oder einem gut dispergierten Pigment, und eine unterhalb der Farbschicht 56 angeordnete Aluminiumschicht 58 gebildet. Farbschicht 56 und Aluminiumschicht 58 können auch auf einem separaten Träger hergestellt und auf das Substrat 52 transferiert werden.

Im Ausführungsbeispiel sind sowohl das Dünnschichtelement 118 als auch die farbkonstante Schicht 54 mit Aussparungen 60 bzw. 62 versehen, wodurch drei Bereiche 70, 72, 74 mit unterschiedlichem visuellen Erscheinungsbild entstehen.

In einem ersten Bereich 70, dem Überdeckungsbereich, ist das Dünnschichtelement 118 über der farbkonstanten Schicht 54 angeordnet. Dort nimmt der Betrachter bei Betrachtung von oben (Pfeil 76) nur das optisch variable Erscheinungsbild des Dünnschichtelements 118 wahr.

Die Bereiche 72, in denen das Dünnschichtelement 118 Aussparungen 60 aufweist, in denen jedoch keine Aussparungen in der farbkonstanten Schicht 54 vorliegen, bilden den nicht überdeckten Bereich 72, in dem der Betrachter aus Richtung 76 die farbkonstante Farbe der Farbschicht 56 wahrnimmt.

Die aus der Betrachtungsrichtung 76 unter der Farbschicht 56 liegende Metallschicht 58 reflektiert dabei das durch die Farbschicht 56 dringende Licht und erhöht so deren Helligkeit und Brillanz. Das Dünnschichtelement 118 und die farbkonstante Schicht 54 sind so aufeinander abgestimmt, dass sie für einen vorbestimmten Betrachtungswinkel, beispielsweise für senkrechte Betrachtung 76, im Wesentlichen denselben Farbeindruck erzeugen. Durch die unterhalb der Farbschicht 56 angeordnete Metallschicht 58 ermöglicht, nicht nur den Farbton, sondern auch den metallische Glanz der farbkonstanten Schicht 54 an den visuellen Eindruck des Dünnschichtelements 118 anpassen.

Da das reflektierte Licht der optisch variablen Schicht nicht durch die farbkonstante Schicht läuft, ist deren Farbkonstanz besonders hoch. Auch kann eine besonders gute Angleichung des Farbeindrucks von optisch variabler Schicht 118 und farbkonstanter Schicht 54 erreicht werden.

In den Bereichen 74, in denen Aussparungen 60 des Dünnschichtelements und Aussparungen 62 der farbkonstanten Schicht 54 übereinander liegen, weist das Sicherheitselement 50 klare Durchsichtsbereiche auf. Die Durchsichtsbereiche 74 sind dabei in der Form von Mustern, Zeichen oder einer Codierung, beispielsweise in Form einer Mikroschrift ausgebildet.

Das Sicherheitselement 80 der Fig. 10 zeigt ein Ausführungsbeispiel, das in den Überdeckungsbereichen 70 von unten nach oben ebenfalls eine Schichtenfolge Metallschicht 58 - Farbschicht 56 - optisch variable Schicht 18 aufweist, wobei die Metallschicht 58 und die Farbschicht 56 zusammen eine farbkonstante Schicht 54 bilden.

Die farbkonstante Schicht 54 und die optisch variable Schicht 18 sind auf gegenüberliegenden Seiten eines transparenten PET-Substrats 52 angeordnet. Bei der optisch variablen Schicht kann es sich insbesondere um eine Flüssigkristallschicht oder um ein Dünnschichtelement handeln. Aussparungen 60 in der optisch variablen Schicht definieren die außerhalb des Überdeckungsbereichs liegenden Bereiche 72, in denen der Betrachter aus Richtung 76 die farbkonstante Schicht 54 wahrnimmt.

Über der optisch variablen Schicht 18 ist eine strukturierte, transparente Schicht 82 aufgebracht, die den Austrittswinkel des von der optisch variablen Schicht reflektierten Lichts verändert und die im Ausführungsbeispiel aus einer Reihe paralleler linearer Mikroprismen 84 einer Größe von etwa 30 µm besteht.

Die Mikroprismen erzeugen dabei eine Vielzahl kleiner Facetten 86 in der strukturierten Schicht 82, die dem ansonsten aufgrund seines flachen Auffallwinkels in der optisch variablen Schicht 18 intern reflektierten Licht erlauben, das Sicherheitselement zu verlassen.

Auf diese Weise wird der reflektierte Farbbereich der optisch variablen Schicht erweitert. Beispielsweise wird bei einer optisch variablen Schicht 18 mit einem Farbkippeffekt, der von Rot bei senkrechter Betrachtung zu Grün bei schräger Betrachtung reicht, blaues Licht normalerweise in der Schicht 18 intern reflektiert, so dass dieses Licht nicht zum visuellen Eindruck in Reflexion beträgt. Die auf die optisch variablen Schicht 18 aufgebrachte strukturierte Schicht 82 ermöglicht jedoch auch dem blauen Licht, das Sicherheitselement 80 zu verlassen. Gleichzeitig werden die längeren Wellenlängen zur Oberflächennormalen hin gebrochen.

Der Farbkippeffekt des Sicherheitselements 80 mit strukturierter Schicht 82 reicht dann von Rot bei senkrechter Betrachtung über Grün bei halb-schräger Betrachtung bis hin zu Blau bei schräger Betrachtung. Weitere Einzelheiten zur Funktionsweise und den möglichen Ausgestaltungen der strukturierten Schicht 82 können der Druckschrift WO 2009/066048 A1 entnommen werden, deren Offenbarung insoweit in die vorliegenden Anmeldung aufgenommen wird.

## Patentansprüche

1. Sicherheitselement zur Absicherung von Wertgegenständen mit
- einer optisch variablen Schicht, die unter unterschiedlichen Betrachtungswinkeln unterschiedliche Farbeindrücke vermittelt und einer farbkonstanten Schicht,
- wobei die optisch variable Schicht und die farbkonstante Schicht in einem Überdeckungsbereich übereinander angeordnet sind, während außerhalb des Überdeckungsbereichs höchstens eine der optisch variablen Schicht und der farbkonstanten Schicht vorliegt,
- wobei der Farbeindruck der übereinander angeordneten Schichten im Überdeckungsbereich und der Farbeindruck der einen Schicht außerhalb des Überdeckungsbereichs bei Betrachtung unter einem vorbestimmten Betrachtungswinkel aneinander angepasst sind, **dadurch gekennzeichnet dass**,
- die farbkonstante Schicht eine Farbschicht und eine unterhalb der Farbschicht angeordnete Metallschicht umfasst.

2. Sicherheitselement nach Anspruch 1, **dadurch gekennzeichnet, dass** in dem Überdeckungsbereich über der optisch variablen Schicht die Farbschicht der farbkonstanten Schicht angeordnet ist, wobei der Farbeindruck der optisch variablen Schicht in dem nicht von der Farbschicht überdeckten Bereich bei Betrachtung unter einem vorbestimmten Betrachtungswinkel an den Farbeindruck der Farbschicht im Überdeckungsbereich angepasst ist und zwischen der Farbschicht und der optisch variablen Schicht die Metallschicht der farbkonstanten Schicht angeordnet ist.

3. Sicherheitselement nach Anspruch 2, **dadurch gekennzeichnet, dass** die Metallschicht im Überdeckungsbereich unmittelbar an die Farbschicht angrenzt oder dass die Metallschicht im Überdeckungsbereich unmittelbar an die optisch variable Schicht angrenzt.

4. Sicherheitselement nach wenigstens einem der Ansprüche 2 oder 3, **dadurch gekennzeichnet, dass** in die optisch variable Schicht ein diffraktives Prägemuster eingeprägt ist, insbesondere dass das diffraktive Prägemuster in eine der Metallschicht zugewandten Oberfläche der optisch variablen Schicht eingeprägt ist.

5. Sicherheitselement nach wenigstens einem der Ansprüche 2 bis 4, **dadurch gekennzeichnet, dass** in einem weiteren Überdeckungsbereich über der optisch variablen Schicht eine nicht von der Farbschicht bedeckte Metallschicht angeordnet ist, welche insbesondere von einem transparenten Resistlack überdeckt ist.

6. Sicherheitselement nach Anspruch 1, **dadurch gekennzeichnet, dass** in dem Überdeckungsbereich die optisch variable Schicht über der Farbschicht der farbkonstanten Schicht angeordnet ist.

7. Sicherheitselement nach wenigstens einem der vorausgehenden Ansprüche, **dadurch gekennzeichnet, dass** die optisch variable Schicht flüssigkristallines Material, insbesondere cholesterisches flüssigkristallines Material, aufweist oder dass die optisch variable Schicht durch ein Dünnschichtelement mit Farbkippeffekt gebildet ist.

8. Sicherheitselement nach wenigstens einem der vorausgehenden Ansprüche, **dadurch gekennzeichnet, dass** das Sicherheitselement als Sicherheitsfaden, Sicherheitsband, Sicherheitsstreifen, Patch oder Etikett zum Aufbringen auf ein Sicherheitspapier, Wertdokument oder dergleichen gestaltet ist.

9. Transferelement zum Aufbringen auf ein Sicherheitspapier, Wertdokument oder dergleichen, mit einem Sicherheitselement nach wenigstens einem der Ansprüche 1 bis 8.

10. Sicherheitspapier für die Herstellung von Sicherheits- oder Wertdokumenten, wie Banknoten, Schecks, Ausweiskarten, Urkunden oder dergleichen, das mit einem Sicherheitselement nach wenigstens einem der Ansprüche 1 bis 8 oder einem Transferelement nach Anspruch 9 ausgestattet ist.

11. Wertgegenstand, wie Markenartikel, Wertdokument oder dergleichen, mit einem Sicherheitselement nach wenigstens einem der Ansprüche 1 bis 8 oder einem Transferelement nach Anspruch 9.

12. Verfahren zum Herstellen eines Sicherheitselements zur Absicherung von Wertgegenständen nach Anspruch 1, bei dem
- die optisch variable Schicht und die farbkonstante Schicht in einem Überdeckungsbereich übereinander angeordnet werden, während außerhalb des Überdeckungsbereichs höchstens eine der optisch variablen Schicht und der farbkonstanten Schicht angeordnet wird,
- wobei der Farbeindruck der übereinander angeordneten Schichten im Überdeckungsbereich und der Farbeindruck der einen Schicht außerhalb des Überdeckungsbereichs bei Betrachtung unter einem vorbestimmten Betrachtungswinkel aneinander angepasst werden, und
- die farbkonstante Schicht aus einer Farbschicht und eine unterhalb der Farbschicht angeordnete Metallschicht gebildet wird.

13. Verfahren nach Anspruch 12, bei dem in dem Überdeckungsbereich über der optisch variablen Schicht die Farbschicht der farbkonstanten Schicht angeordnet wird, wobei der Farbeindruck der optisch variablen Schicht außerhalb des Überdeckungsbereichs bei Betrachtung unter einem vorbestimmten Betrachtungswinkel an den Farbeindruck der Farbschicht im Überdeckungsbereich angepasst wird, und die Metallschicht der farbkonstanten Schicht zwischen der Farbschicht und der optisch variablen Schicht angeordnet wird.

14. Verfahren nach Anspruch 13, **dadurch gekennzeichnet, dass** die Farbschicht als Resistlack ausgebildet ist sowie dass nach einem Ausbilden der Metallschicht durch vollflächiges Metallisieren der optisch variablen Schicht die Farbschicht in zumindest dem Überdeckungsbereich auf die Metallschicht aufgebracht wird, und die Metallschicht in einem nicht von der Farbschicht überdeckten Bereich durch Ätzdemetallisierung entfernt wird.

15. Verfahren nach Anspruch 13, **dadurch gekennzeichnet, dass** vor dem Anordnen der Farbschicht über der optisch variablen Schicht in dem Überdeckungsbereich eine Waschfarbe auf der optisch variablen Schicht außerhalb des Überdeckungsbereichs angeordnet wird, die optisch variable Schicht mit der darauf angeordneten Waschfarbe zur Ausbildung der Metallschicht vollflächig metallisiert wird, die Farbschicht vollflächig auf die Metallschicht aufgebracht wird, und mittels einer die Farbschicht durchdringenden Waschflüssigkeit die Waschfarbe derart ausgewaschen wird, dass im Bereich der Waschfarbe die Farbschicht zusammen mit der Metallschicht entfernt wird.

16. Verfahren nach wenigstens einem der Ansprüche 13 bis 15, **dadurch gekennzeichnet, dass** die optisch variable Schicht durch flüssigkristallines Material gebildet wird, und dass in das flüssigkristalline Material ein diffraktives Prägemuster eingeprägt wird.

17. Verfahren nach Anspruch 16, **dadurch gekennzeichnet, dass** die optisch variable Schicht vor dem Einprägen des diffraktiven Prägemusters auf ein Substrat transferiert wird.

18. Verfahren nach mindestens einem der Ansprüche 13 bis 17, welches dazu konfiguriert ist, das Sicherheitselement nach wenigstens einem der Ansprüche 1 bis 5 herzustellen.

19. Verfahren nach Anspruch 12, **dadurch gekennzeichnet, dass** in dem Überdeckungsbereich die optisch variable Schicht über der Farbschicht der farbkonstanten Schicht angeordnet wird.

## Claims

1. A security element for securing valuable articles, having
- an optically variable layer that conveys different color impressions at different viewing angles, and a color-constant layer,
- the optically variable layer and the color-constant layer being stacked in a covering region, while at most one of the optically variable layer and the color-constant layer is present outside the covering region,
- the color impression of the stacked layers in the covering region and the color impression of the one layer outside the covering region being matched with each other when viewed at a predetermined viewing angle, **characterized in that**
- the color-constant layer comprising an ink layer and a metal layer arranged below the ink layer.

2. The security element according to claim 1, **characterized in that** the ink layer of the color-constant layer is arranged in the covering region over the optically variable layer, the color impression of the optically variable layer in the region not covered by the ink layer being matched with the color impression of the ink layer in the covering region when viewed at a predetermined viewing angle, and the metal layer of the color-constant layer being arranged between the ink layer and the optically variable layer.

3. The security element according to claim 2, **characterized in that** the metal layer in the covering region immediately adjoins the ink layer, or that the metal layer in the covering region immediately adjoins the optically variable layer.

4. The security element according to at least one of claims 2 or 3, **characterized in that** a diffractive embossing pattern is embossed in the optically variable layer, especially that the diffractive embossing pattern is embossed in an optically variable layer surface that faces the metal layer.

5. The security element according to at least one of claims 2 to 4, **characterized in that** a metal layer that is not covered by the ink layer and that is especially covered by a transparent resist coating is arranged in a further covering region over the optically variable layer.

6. The security element according to claim 1, **characterized in that**, in the covering region, the optically variable layer is arranged over the ink layer of the color-constant layer.

7. The security element according to at least one of the preceding claims, **characterized in that** the optically variable layer exhibits liquid crystal material, especially cholesteric liquid crystal material, or that the optically variable layer is formed by a thin-film element having a color-shift effect.

8. The security element according to at least one of the preceding claims, **characterized in that** the security element is designed as a security thread, security band, security strip, patch or label for application to a security paper, value document or the like.

9. A transfer element for application to a security paper, value document or the like, having a security element according to at least one of claims 1 to 8.

10. A security paper for manufacturing security or value documents, such as banknotes, checks, identification cards, certificates or the like, that is furnished with a security element according to at least one of claims 1 to 8 or a transfer element according to claim 9.

11. A valuable article, such as a branded article, value document or the like, having a security element according to at least one of claims 1 to 8 or a transfer element according to claim 9.

12. A method for manufacturing a security element for securing valuable articles according to claim 1, in which
- the optically variable layer and the color-constant layer are stacked in a covering region, while at most one of the optically variable layer and the color-constant layer is arranged outside the covering region,
- the color impression of the stacked layers in the covering region and the color impression of the one layer outside the covering region being matched with each other when viewed at a predetermined viewing angle, and
- the color-constant layer is formed from an ink layer and a metal layer arranged below the ink layer.

13. The method according to claim 12, in which the ink layer of the color-constant layer is arranged in the covering region over the optically variable layer, the color impression of the optically variable layer outside the covering region being matched with the color impression of the ink layer in the covering region when viewed at a predetermined viewing angle, and the metal layer of the color-constant layer being arranged between the ink layer and the optically variable layer.

14. The method according to claim 13, **characterized in that** the ink layer is developed as a resist coating and **in that**, after a development of the metal layer through contiguous metalization of the optically variable layer, the ink layer is applied to the metal layer in at least the covering region, and the metal layer is removed through etching demetalization in a region not covered by the ink layer.

15. The method according to claim 13, **characterized in that**, before the arrangement of the ink layer over the optically variable layer in the covering region, a washable ink is arranged on the optically variable layer outside the covering region, the optically variable layer having the washable ink arranged on it is contiguously metalized to develop the metal layer, the ink layer is contiguously applied to the metal layer, and by means of a washing liquid that penetrates the ink layer, the washable ink is washed out in such a way that, in the region of the washable ink, the ink layer is removed together with the metal layer.

16. The method according to at least one of claims 13 to 15, **characterized in that** the optically variable layer is formed by liquid crystal material, and **in that** a diffractive embossing pattern is embossed in the liquid crystal material.

17. The method according to claim 16, **characterized in that** the optically variable layer is transferred to a substrate before the embossing of the diffractive embossing pattern.

18. The method according to at least one of claims 13 to 17 that is configured to manufacture the security element according to at least one of claims 1 to 5.

19. The method according to claim 12, **characterized in that**, in the covering region, the optically variable layer is arranged over the ink layer of the color-constant layer.

## Revendications

1. Elément de sécurité pour la sécurisation d'objets de valeur avec
- une couche optiquement variable, laquelle confère différents effets chromatiques sous différents angles d'observation, et une couche à stabilité chromatique,
- la couche optiquement variable et la couche à stabilité chromatique étant disposées l'une au-dessus de l'autre dans une zone de recouvrement, alors qu'en-dehors de la zone de recouvrement, il y a tout au plus l'une d'entre la couche optiquement variable et la couche à stabilité chromatique,
- moyennant quoi l'on adapte l'un à l'autre l'effet chromatique des couches disposées l'une au-dessus de l'autre dans la zone de recouvrement et l'effet chromatique de l'une des couches en-dehors de la zone de recouvrement lors de l'observation sous un angle d'observation prédéterminé, **caractérisé en ce que**
- la couche à stabilité chromatique comprend une couche colorée et une couche métallique disposée en-dessous de la couche colorée.

2. Elément de sécurité selon la revendication 1, **caractérisé en ce que**, dans la zone de recouvrement, on dispose au-dessus de la couche optiquement variable la couche colorée de la couche à stabilité chromatique, moyennant quoi l'effet chromatique de la couche optiquement variable dans la zone non recouverte par la couche colorée est adapté, lors de l'observation sous un angle d'observation prédéterminé, à l'effet chromatique de la couche colorée dans la zone de recouvrement, et la couche métallique de la couche à stabilité chromatique étant disposée entre la couche colorée et la couche optiquement variable.

3. Elément de sécurité selon la revendication 2, **caractérisé en ce que** la couche métallique dans la zone de recouvrement jouxte directement la couche colorée ou bien **en ce que** la couche métallique dans la zone de recouvrement jouxte directement la couche optiquement variable.

4. Elément de sécurité selon l'une au moins des revendications 2 ou 3, **caractérisé en ce qu'**un motif d'estampage diffractif est estampé dans la couche optiquement variable, en particulier **en ce que** le motif d'estampage diffractif est estampé dans une surface, orientée vers la couche métallique, de la couche optiquement variable.

5. Elément de sécurité selon l'une au moins des revendications 2 à 4, **caractérisé en ce que**, dans une autre zone de recouvrement, au-dessus de la couche optiquement variable, une couche métallique non recouverte par la couche colorée est disposée, laquelle est en particulier recouverte par une résine photosensible transparente.

6. Elément de sécurité selon la revendication 1, **caractérisé en ce que**, dans la zone de recouvrement, la couche optiquement variable est disposée au-dessus de la couche colorée de la couche à stabilité chromatique.

7. Elément de sécurité selon l'une au moins des revendications précédentes, **caractérisé en ce que** la couche optiquement variable présente un matériau à cristaux liquides, en particulier un matériau à cristaux liquides choléstérique, ou bien **en ce que** la couche optiquement variable est formée par un élément à couche mince avec un effet de changement de couleur.

8. Elément de sécurité selon l'une au moins des revendications précédentes, **caractérisé en ce que** l'élément de sécurité est réalisé en tant que fil de sécurité, ruban de sécurité, bande de sécurité, patch ou étiquette à appliquer sur un papier de sécurité, un document de valeur ou similaires.

9. Elément de transfert à appliquer sur un papier de sécurité, un document de valeur ou similaires, avec un élément de sécurité selon l'une au moins des revendications 1 à 8.

10. Papier de sécurité pour la fabrication de documents de sécurité ou de valeur, tels des billets de banque, des chèques, des cartes d'identification, des actes ou similaires, lequel est muni d'un élément de sécurité selon l'une au moins des revendications 1 à 8 ou d'un élément de transfert selon la revendication 9.

11. Objet de valeur, tel un article de marque, un document de valeur ou similaires, avec un élément de sécurité selon l'une au moins des revendications 1 à 8 ou un élément de transfert selon la revendication 9.

12. Procédé pour la fabrication d'un élément de sécurité pour la sécurisation d'objets de valeur selon la revendication 1, dans lequel
- la couche optiquement variable et la couche à stabilité chromatique sont disposées l'une au-dessus de l'autre dans une zone de recouvrement, alors que tout au plus l'une d'entre la couche optiquement variable et la couche à stabilité chromatique est disposée en-dehors de la zone de recouvrement,
- moyennant quoi l'effet chromatique des couches disposées l'une au-dessus de l'autre dans la zone de recouvrement et l'effet chromatique de cette une couche en-dehors de la zone de recouvrement sont adaptés l'un à l'autre lors de l'observation sous un angle d'observation prédéterminé, et
- la couche à stabilité chromatique étant formée par une couche colorée et une couche métallique disposée en-dessous de la couche colorée.

13. Procédé selon la revendication 12, dans lequel, dans la zone de recouvrement, on dispose au-dessus de la couche optiquement variable la couche colorée de la couche à stabilité chromatique, moyennant quoi l'effet chromatique de la couche optiquement variable en-dehors de la zone de recouvrement est adapté à l'effet chromatique de la couche colorée dans la zone de recouvrement lors de l'observation sous un angle d'observation prédéterminé, et la couche métallique de la couche à stabilité chromatique étant disposée entre la couche colorée et la couche optiquement variable.

14. Procédé selon la revendication 13, **caractérisé en ce que** la couche colorée est réalisée en tant que résine photosensible et **en ce qu'**après une réalisation de la couche métallique par métallisation sur toute la surface de la couche optiquement variable, on applique la couche colorée sur la couche métallique au moins dans la zone de recouvrement, et la couche métallique étant éliminée dans une zone non recouverte par la couche colorée grâce à une démétallisation par gravure.

15. Procédé selon la revendication 13, **caractérisé en ce qu'**avant la disposition de la couche colorée au-dessus de la couche optiquement variable dans la zone de recouvrement, une couleur lavable est disposée sur la couche optiquement variable en-dehors de la zone de recouvrement, la couche optiquement variable avec la couleur lavable disposée dessus étant métallisée sur toute la surface pour la formation de la couche métallique, la couche colorée étant appliquée sur toute la surface sur la couche métallique, et la couleur lavable étant retirée par lavage à l'aide d'un liquide de lavage pénétrant dans la couche colorée de manière à ce que dans la zone de la couleur lavable, la couche colorée est éliminée ensemble avec la couche métallique.

16. Procédé selon l'une au moins des revendications 13 à 15, **caractérisé en ce que** la couche optiquement variable est formée par un matériau à cristaux liquides, et **en ce qu'**un motif d'estampage diffractif est estampé dans le matériau à cristaux liquides.

17. Procédé selon la revendication 16, **caractérisé en ce que** la couche optiquement variable est transférée sur un substrat avant l'estampage du motif d'estampage diffractif.

18. Procédé selon l'une au moins des revendications 13 à 17, lequel est configuré pour fabriquer l'élément de sécurité selon l'une au moins des revendications 1 à 5.

19. Procédé selon la revendication 12, **caractérisé en ce que**, dans la zone de recouvrement, la couche optiquement variable est disposée au-dessus de la couche colorée de la couche à stabilité chromatique.
